Europäisches Patentamt

European Patent Office

Office européen des brevets

(11) Publication number: **0 395 416**
**A2**

## (12) EUROPEAN PATENT APPLICATION

(21) Application number: **90304548.2**

(22) Date of filing: **26.04.90**

(51) Int. Cl.⁵: **G06F 13/38**

(30) Priority: **26.04.89 US 343990**

(43) Date of publication of application:
**31.10.90 Bulletin 90/44**

(84) Designated Contracting States:
**DE FR GB NL**

(71) Applicant: **DUBNER COMPUTER SYSTEMS INC.**
**6 Forest Avenue**
**Paramus New Jersey 07652-5214(US)**

(72) Inventor: **Pittas, John L.**
**20 East Pembroke Road, No. 15**
**Danbury, Connecticut 06811(US)**

(74) Representative: **Molyneaux, Martyn William et al**
**c/o Ladas & Parry Isartorplatz 5**
**D-8000 Munich 2(DE)**

(54) **SCSI bus data link.**

(57) An SCSI bus data link connects remote devices (10, 14) having SCSI interfaces via a serial data line (20). A transmitting data link module (18) is connected to the SCSI bus (12) at one site to transmit SCSI data as a serial bit stream over the serial data line to a receiving data link module (18') connected to the SCSI bus (121) at the remote site. The data link modules appear to the SCSI bus as either an SCSI initiator at the receiving end or an SCSI target device at the transmitting end. The receiving data link module performs a transmission error check and returns an acknowledgment to the transmitting data link module indicating whether there was a transmission error. If a transmission error is detected, the transmitting data link module retransmits the data.

FIG.1

## SCSI BUS DATA LINK

### Background of the Invention

The present invention relates to communications links, and more particularly to a Small Computer Systems Interface (SCSI) bus data link for interfacing two computers or a computer and a peripheral at high speed over great distances using SCSI without requiring modification to existing SCSI bus hardware or software.

The Small Computer Systems Interface (SCSI) specification, defined by American National Standard X3.131-1986, determines mechanical, electrical and functional requirements for attaching small computers with each other and with low to medium performance intelligent peripherals. The resulting interface eases the interconnection of small computers and intelligent peripherals and, thus, provides a common interface specification for systems integrators and suppliers of such small computers and intelligent peripherals.

What is desired is an SCSI bus data link to provide high speed communications between computers and peripherals on their respective SCSI buses, which devices are remotely situated from each other, in a transparent manner to an operator.

### Summary of the Invention

Accordingly the present invention provides an SCSI bus data link for communicating between remote computers and intelligent peripherals that are coupled to their respective SCSI buses. The data link mimics the electrical and functional characteristics of the ANSI X3.131-1986 SCSI specification so that the data link appears transparent to operations performed on an SCSI bus. Data in the form of device selection and commands generated by an SCSI initiator are received by a data link module that appears like an SCSI target device to the initiator. This data is sent across a high speed serial interface to another data link module that mimics the behavior of the SCSI initiator to select and write the data to the peripheral device that is the true target of the SCSI initiator's commands. The data link module has a serial input/output port and a bi-directional SCSI port which are accessed by a microcomputer. Also a direct memory access machine that includes memories and controllers has access to the serial and SCSI ports. The microcomputer performs data transfers between SCSI and serial ports using a single byte transfer algorithm, while the direct memory access machine performs block transfers. A data transfer protocol returns an acknowledge byte upon validly receiving data.

The objects, advantages and other novel features of the present invention are apparent from the following detailed description when read in conjunction with the appended claims and attached drawing.

### Brief Description of the Drawing

Fig. 1 is a block diagram of a simple two site topology for an SCSI bus data link according to the present invention.

Fig. 2 is a block diagram of a single bus topology for up to eight SCSI bus devices distributed at four sites according to the present invention.

Fig. 3 is a block diagram of a bridge topology for connecting networks of more than eight devices according to the present invention.

Fig. 4 is a block diagram of a data link module according to the present invention.

Figs. 5a-5f are a flowchart of the block transfer function of the direct memory access machine according to the present invention.

### Description of the Preferred Embodiment

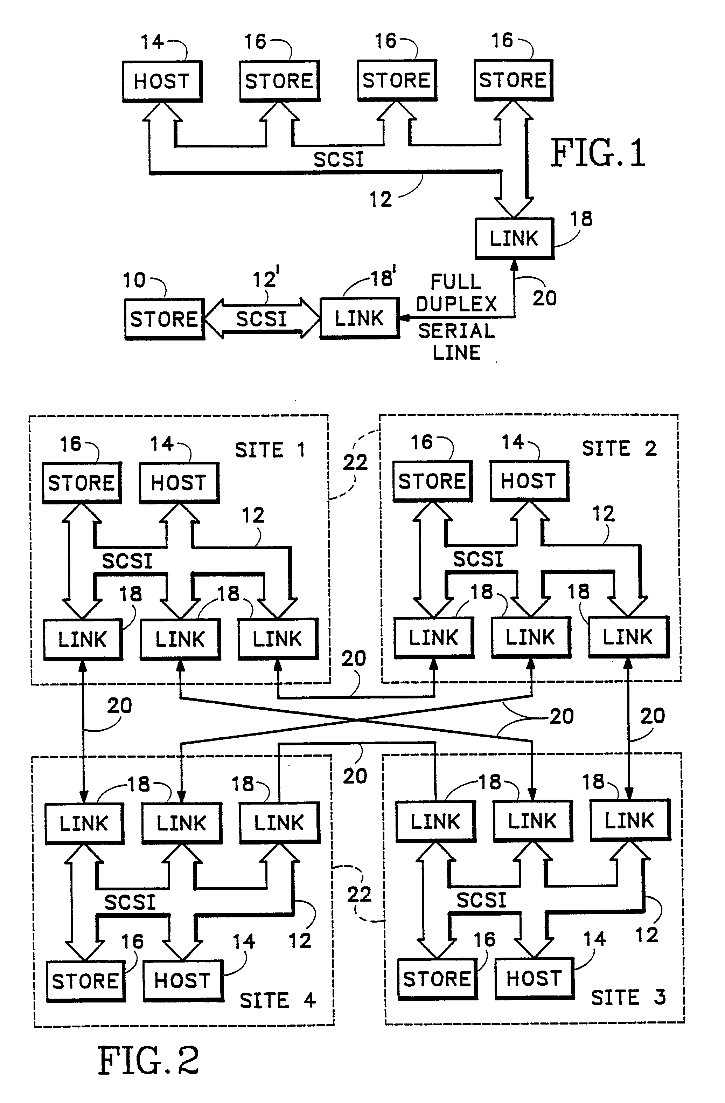

Referring now to Fig. 1 a simple topology for connecting a remote SCSI device 10 to an SCSI bus 12 is shown. A host computer 14 together with associated storage devices 16 are all connected to the SCSI bus 12. The SCSI bus 12 is coupled to a data link module 18. The data link module 18 communicates with a remote data link module 18' over a serial data line 20. The remote device 10 is coupled to the remote data link module by an extension 12' of the SCSI bus 12. The remote storage device 10 "sees" the SCSI bus 12 as though the data link modules 18, 18' and serial data line 20 did not exist. Likewise the host computer 14 "sees" the remote device 10 as being connected to the SCSI bus 12.

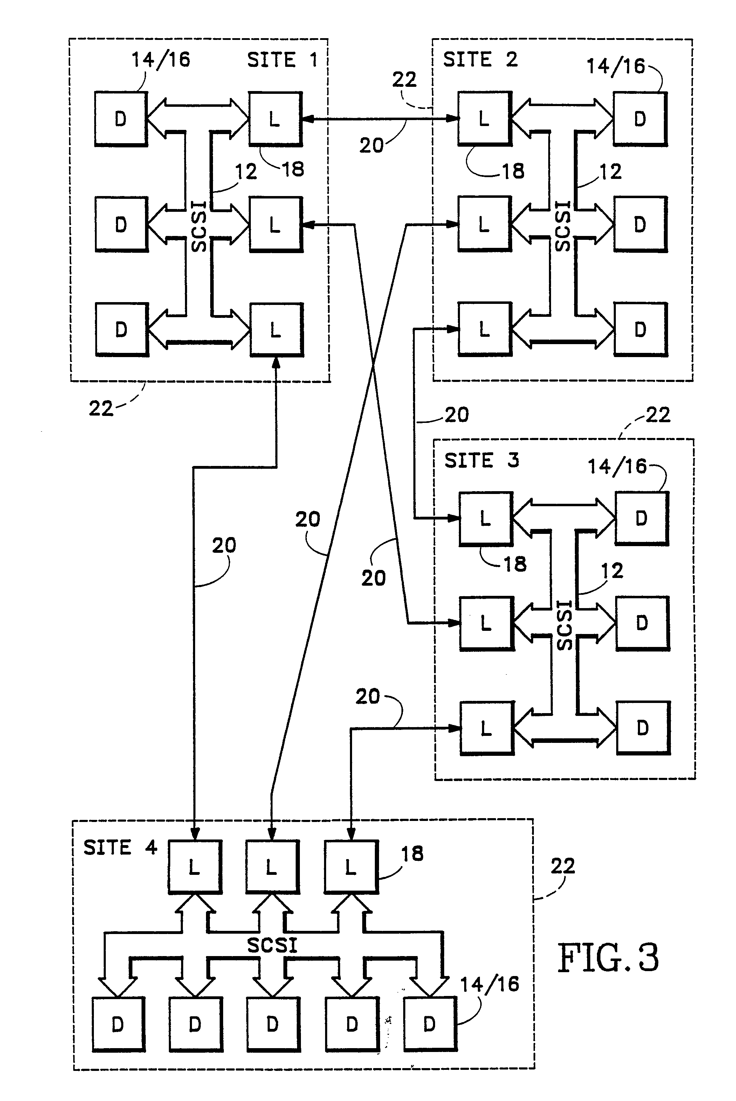

A more complex single bus topology is shown in Fig. 2 where up to eight devices 14/16 are connected to respective SCSI buses 12 distributed at four remote sites 22. Each remote site 22 is linked to each of the other sites via data link modules 18 and serial data lines 20, a separate data link module at one site being assigned to communicate with each other remote site. Just as in the single peripheral case, communications from one site 22 to another present a transparent operation for the SCSI bus between devices 14/16 situated at different sites. For more than eight devices 14/16, such as the fourteen devices shown in Fig. 3, the connection between sites is the same as for Fig. 2, i.e., one data link module 18 at each site 22 for each other site to which that site is connected. However to access a remote device 14/16 the data link module 18 for the remote site 22 is first addressed, and then the desired device at the remote site is addressed. This topology, using special software, behaves as a connection bridge between two SCSI buses 12 and allows multiple simultaneous transfers between buses.

Device selection and commands generated by an SCSI initiator at the originating site 22 are received by the appropriate data link module 18 that mimics the behavior of the selected, or target, device 14/16. This data is sent across the serial interface to the data link module 18 at the designated site 22. The receiving data link module 18 mimics the SCSI initiator at the originating site to select and write the data to the selected device 14/16 that is the true target of the SCSI initiator's commands. If the command is a request for a data transfer between the initiator and the target, the data link performs this operation at rates matching or exceeding those contained in the SCSI ANSI specification.

The data transfer protocols across the SCSI bus 12 are defined in the ANSI specification. The data transfer protocols across the serial port are governed by the data link modules, and are one of two categories: single byte transfers or block transfers. Single byte transfers are performed by transferring bytes of data across the serial port using a double transmit/double acknowledge protocol. This protocol requires that a byte be sent twice across the serial port by the transmitting data link module 18. The receiving data link module 18 compares the received bytes and, if the bytes match, transmits two acknowledge (ACK) bytes back to the transmitting data link module. If the bytes do not match, then a pair of not acknowledged (NACK) bytes are sent to the transmitting data link module 18. The transmitting data link module need only receive one of the ACK or NACK bytes to either verify the transfer or attempt a retransmit. If both ACK/NACK bytes are corrupted, the transmitting data link module enters an error recovery state and interrupts the receiving data link module to determine whether an ACK or NACK was transmitted by the receiving data link module before continuing with another transfer. Single byte transfers are performed during SCSI arbitration, select, command, end status and reset phases as well as for SCSI data phase transfers for functions that do not use block transfers. Data link module status exchange between data link modules 18 also is performed on a single byte basis.

Block transfers transfer blocks of data across the serial port using a block checksum/double acknowledge protocol. For a block of "n" bytes, $n+1$ bytes are transmitted where the $n+1$th byte is a bit-column exclusive-or (XOR) checksum of the block. The checksum is calculated on the fly as the data is being transmitted. At the receiving data link module 18 an XOR checksum also is calculated on the fly as the data is received. Receipt of the $n+1$th byte triggers a checksum comparison. A checksum match generates a double ACK transmission to the transmitting data link module 18, whereas a mismatch transmits a double NACK. If the NACK is received by the transmitting data link module 18, the block is retransmitted until an ACK is received. As for the single byte transmission, only a single ACK/NACK needs to be recognized by the transmitting data link module, while if both ACK/NACKs are corrupted an error recovery state is entered and the receiving data link module is interrupted to determine whether an ACK or NACK was transmitted before continuing with another block transfer. The transfer protocols for both the single byte and block transfers are essentially identical. The XOR sum of the smallest size block (a single byte) with zero is the identical byte.

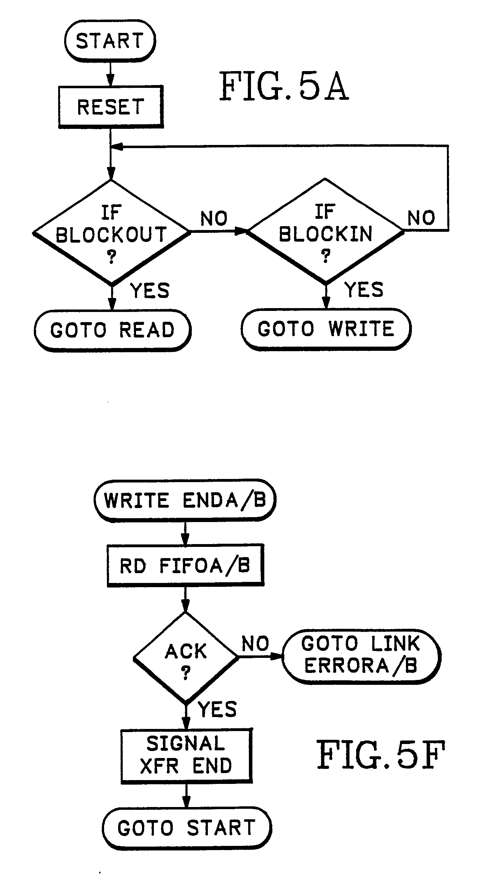

The hardware is designed to match or exceed the maximum SCSI bus data block transfer rates across the serial port, to detect and recover from most serial port bit errors in a parsimonious fashion, and to communicate with an intelligent, i.e., programmable, device across both the SCSI and serial ports. The data rate requirement results in a fairly high data rate across the serial port. Assuming eight bits of SCSI data with a parity bit and a special data link status bit, a four megabyte per second SCSI block transfer demands a minimum serial port data rate of forty megabits per second. To support block retransmits due to detected errors, sufficient memory space is required to hold the data after the initial transmission while allowing overlapped transfers across the SCSI bus. The basic hardware architecture for a data link module 18 shown in Fig. 4 is designed to meet these functional criteria.

A receiver 24 and a transmitter 26 form a serial port interface. Outgoing/incoming serial data is routed to/from the receiver/transmitter from either an optical or electrical transmitter/receiver (not shown). An SCSI port provides bi-directional access to the SCSI data and status lines that make up the SCSI bus 12 by means of a pair of transceivers 28, 30 and latches 32, 34, 36. A microprocessor 38 accesses both the serial and SCSI ports via a first bus 40. A high speed direct memory access (DMA) machine, composed of a microcontroller 42, SCSI & FIFO controller 44 and first-in, first-out (FIFO) memories 46, 48, also accesses the SCSI and serial ports via data buses 50, 52, 54. A RCVR CLKS & FIFO WR device 56 and a XMTR CLKS & FIFO RD device 58 are programmable devices that manage serial port traffic to the microcomputer 38 and the DMA machine. Block data from the receiver 24 is input to one of the memories 46, 48 via a buffer 60. Likewise block data from the SCSI bus is loaded into the memories 46, 48 via an SCSI buffer 62. The block data in the memories 46, 48 is either output to the SCSI port via latch 64 over data bus 54 or to the serial port via buffer 66 to the transmitter 26. A checksum comparator 68 calculates the checksum for the block transfer from the serial port on the fly and compares that number with the checksum byte of the block data. At the transmit end a checksum generator 70 calculates the checksum to be added as the $n+1$th byte of the block transfer to the serial port for transmission. For single byte transfers the received duplicate bytes from the serial port are received by the microprocessor 38 via a receive latch 72, while transmitted bytes are output by the microprocessor via a transmit latch 74 to the serial port. The single bytes are output onto or input from the SCSI port by the microprocessor 38 via the transceiver 30. The checksum comparison or byte comparison for the received data causes a link ACK/NACK block 76 to output the appropriate acknowledgment to the serial port to indicate to the transmitting data link module 18 whether the data transfer occurred with or without error. Incoming ACK/NACK is recognized and signalled by the link status 78.

The SCSI & FIFO controller 44 has a byte counter, a block counter and several programmable logic devices (PLD). The byte counter keeps track of the number of bytes in a block, and the block counter keeps track of the number of blocks in a transfer. Both counters are loaded at the beginning of a transfer by the microprocessor 38. The PLDs generate read and write strobes for the appropriate memories 46, 48 from the SCSI port as well as SCSI bus request and acknowledge signals. The controller 42 determines which memory 46, 48 is being written/read by the SCSI bus 12 as opposed to read/written by the serial port, and steers the appropriate control signals to the SCSI & FIFO controller 44, the RCVR CLKS & FIFO WR 56 and the XMTR CLKS & FIFO RD 58 PLDs. The checksums are generated on the fly and sent automatically by the XMTR CLKS & FIFO RD 58 PLD. At the receiving data link module 18′ the output of the checksum comparator 68 is tested after receipt of the $n+1$th byte. If the comparison is true, an ACK is sent by the controller 42 from the link ACK/NACK block 76. At the transmitting data link module 18 the controller 42 tests the output of a link status register 78 for either ACK or NACK. If the result is an ACK and there is an unsent block of data in one of the memories 46, 48, the unsent data is readied for transmission across the link. If an additional block is to be received from the SCSI port, the empty memory 46, 48 has this new data block written into it. At the receiving data link module 18′ the now loaded memory 46, 48 is read by the SCSI port and the previously emptied memory 48, 46 is readied for serial port write.

This alternating of block write or reads to the memories 46, 48 by the SCSI port and the complementing FIFO function by the serial port continues until the block counters in the SCSI & FIFO controllers 44 of both the transmitting and receiving data link modules 18 are exhausted. At this point the controller 42 notifies the microprocessor 38 that the block transfer is complete and returns control of the SCSI and serial ports to the microprocessor. SCSI end status is then completed between the two link microprocessors 38. If during the course of the transfer the SCSI target attempts to terminate the transfer before it is completed, the microprocessor 38 in the receiving data link module 18′ recognizes this effort and stops its DMA machine. The microprocessor 38 then transmits a special link enquire byte to the transmitting data link module 18, and the transmitting data link module's microprocessor stops its DMA machine. The two microprocessors then correctly enter the SCSI end status phase.

If during the receipt of a block transfer the output of the checksum comparator 68 is false, the controller 42 resets the receiving memory 46, 48 write pointer, sends a NACK from the link ACK/NACK block 76 to the transmitting data link module 18, and notifies the microprocessor 38 that a bad block was received. The microprocessor 38 notes this condition and returns control back to the controller 42. At the transmitting data link module receipt of the NACK by the link status register 78 is indicated to the microprocessor by the controller 42. This is noted and control returned to the controller 42. The transmitting memory's read pointer is reset and the transfer is reattempted.

Bridging separate SCSI buses 12 together as in Fig. 3 requires a few modifications to the basic data link operation. First, the data link modules 18 are assigned an SCSI bus address so that the onboard microprocessor 38 only responds to bus activity addressed to it. Second a Bridge to Remote Bus SCSI function is issued to the selected data link module. This function contains all the parameters of a normal block or non-block SCSI command. These parameters are sent across the link to the receiving data link module 18, where a normal SCSI access is performed to the targeted device 14/16.

Referring now to Figs. 5a-5f, for the controller 42 at the beginning of a block data transfer between SCSI devices that are remote from each other, the data link modules 18 involved are initialized and a determination is made as to whether the particular data link module is transmitting from the SCSI port to the serial port or is receiving from the serial port to the SCSI port. If the data link module is receiving data from the SCSI port a write routine is accessed, otherwise if transmitting to the SCSI port a read routine is accessed.

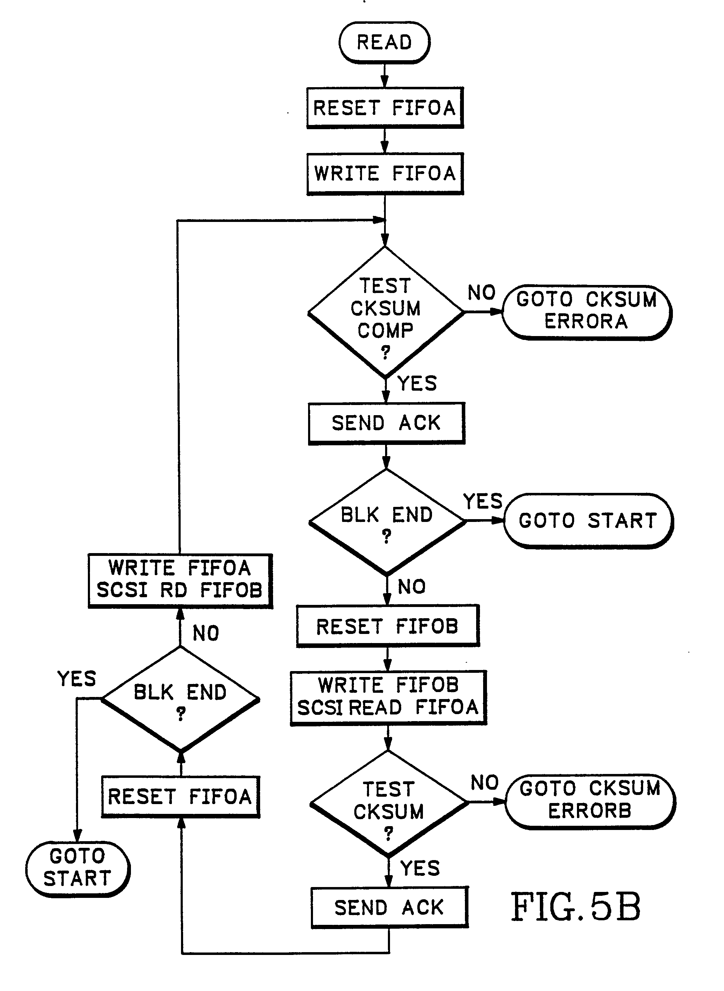

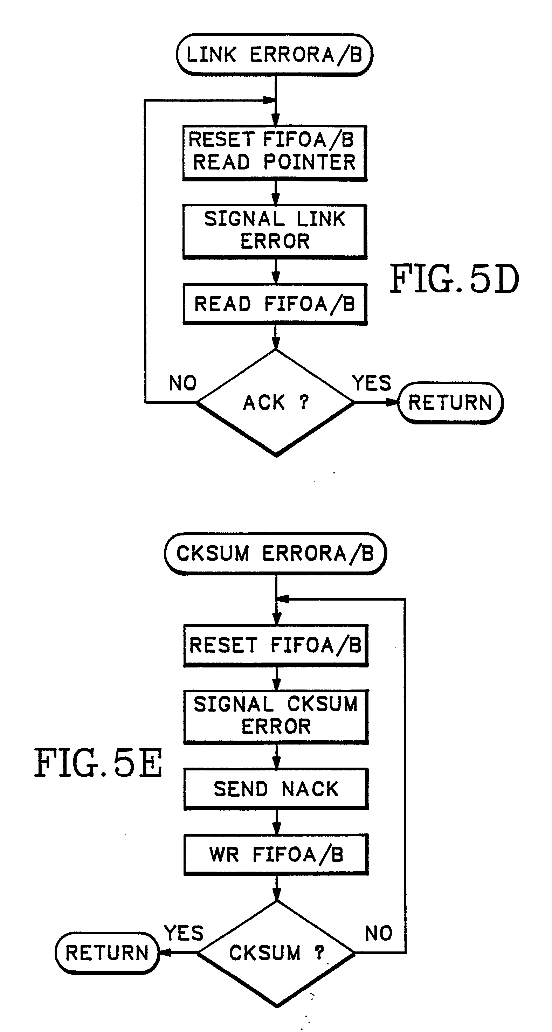

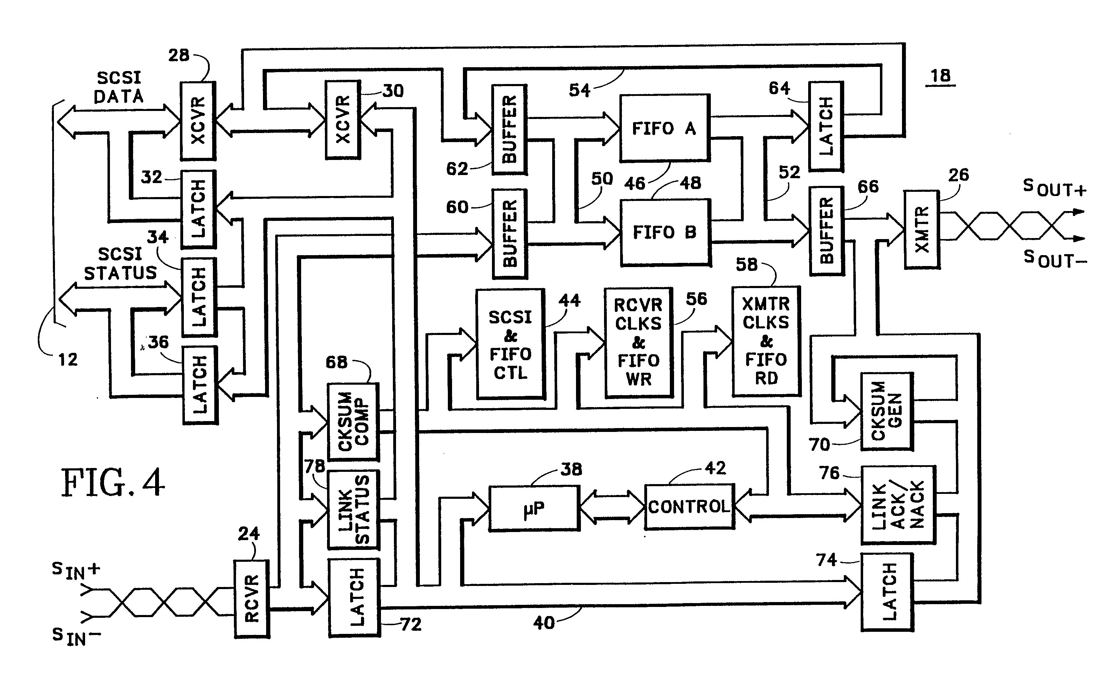

The read routine (Fig. 5b) resets FIFO A 46 and then writes the data from the serial port into FIFO A. The output of the checksum comparator 68 is tested to see if the checksum from the data matches that calculated on the fly. If the checksums match, an ACK byte is sent to the transmitting data link module. If there are no more blocks of data to be received, then the routine returns to start. Otherwise the next FIFO B 48 is prepared to receive the next block of data. As data is read from the serial port into FIFO B, data in FIFO A is read by the SCSI port. Again the checksum is tested for a match, and if true the ACK byte is transmitted and FIFO A is prepared to receive the next block of data, if there is any. In this manner block transfers are made, alternating between the two memories 46, 48 so that one is reading data from the serial port while the other is transferring data to the SCSI port. If there is a checksum error in the data written to one of the FIFOs, a checksum error routine (Fig. 5e) resets that FIFO, signals to the microprocessor 38 that there is a checksum error and sends a NACK byte to the transmitting data link module. The retransmitted data is then read into the same FIFO and the checksum is tested again. If there is still a checksum error, the routine is recycled, otherwise the routine returns to the read routine at the point after the checksum test for that FIFO.

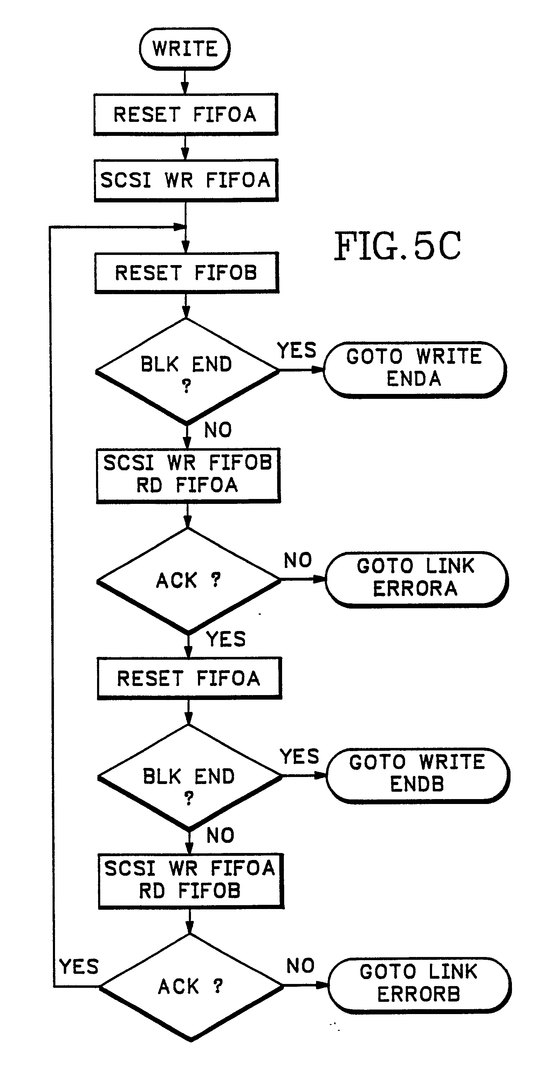

At the transmitting data link module the write routine (Fig. 5c) is accessed. The first memory FIFO A 46 is initialized and data from the SCSI port is written into FIFO A. The second memory FIFO B 48 is then initialized and a test is made regarding whether there are any more blocks of data to send. If there are more blocks to send, the data is written from the SCSI port into FIFO B while the data in FIFO A is read out to the serial port. After the data is read out to the serial port from FIFO A, a test is made to determine whether an ACK byte has been received from the receiving data link module. If ACK is received, then the cycle is repeated by resetting FIFO A, testing for the end of blocks of data, and then reading out the data from FIFO B to the serial port while writing in data from the SCSI bus to the FIFO A. In the event of an end of data blocks, then a write end routine (Fig. 5f) is accessed. The write end routine reads the FIFO for transmission of the data via the serial port. After receipt of an ACK byte from the receiving data link module, the controller 42 signals the microprocessor 38 that the block transfer is complete and returns to the starting conditions. In the event that a NACK byte is received after reading out a memory to the serial transmitter, then a link error routine (Fig. 5d) is accessed. The link error routine resets the read pointer for the memory, signals a link error to the microprocessor 38, and then rereads the data out to the serial port. If NACK is received, the routine is repeated, otherwise the routine returns to the write routine at the point after the ACK test that generated the initial error.

Thus the present invention provides an SCSI bus data link for communicating transparently between remote devices connected to an SCSI bus. A data link module connected to the SCSI bus has an SCSI port for transferring data between the SCSI bus and the module and a serial port for transferring data between modules over a serial data line. The data link module appears to the SCSI initiator as an SCSI target device, while it appears to an SCSI target device as an SCSI initiator.

**Claims**

1. A system bus data link comprises:
means for converting (18) data from a system initiator device (14) for a system target device (10) into a serial bit stream, the converting means appearing to the system initiator device as the system target device;
means for transmitting (18) the serial bit stream;
means for receiving (18$'$) the serial bit stream; and
means for converting (18$'$) the serial bit stream into data for the system target device, the converting means appearing to the system target device as the system initiator device.

2. A system bus data link as claimed in claim 1 wherein each converting means comprises:
a system port (28-36) for receiving data from the system initiator device and for transmitting data for the system target device;
a serial port (24-26) for transmitting data to the transmitting means and for receiving data from the receiving means;
means for storing (46-48) data from the system port and the serial port; and
means for transferring (64-66) data from the storing means to the system port and the serial port.

3. A system bus data link as recited in claim 2 wherein each converting means further comprises:
means for generating (70) an error check byte for addition to the data when transferred from the storing means for transmission via the serial port;
means for comparing (68) the error check byte when the data is received via the serial port to generate an error signal if a transmission error occurred in transmitting the data between the system initiator device and the system target device; and
means for generating (76) an acknowledge signal indicating receipt of the data via the serial port in response to the error signal, the state of the acknowledge signal also indicating the state of the error signal.

4. A system bus data link as recited in claim 3 wherein each converting means further comprises means for retransmitting (38, 42) the data from the system initiator device for the system target device when the state of the acknowledge signal indicates that a transmission error occurred.

5. A method of transferring data in a transparent manner between two devices sharing a given protocol that are remotely sited from each other comprises the steps of:
storing data from one of the devices in a first memory, the one device being a transmitting device;
transmitting the data from the first memory according to a serial protocol to a second memory remotely sited with the other device, the other device being a receiving device;
transferring the data in the second memory to the receiving device according to the given protocol.

6. A method as recited in claim 5 further comprising the step of reading data from the first memory for transmission to the second memory and from the second memory for transferrence to the receiving device while writing data from the transmitting device into the first memory and from the first memory into the second memory.

7. A method as recited in claim 6 further comprising the step of acknowledging to the transmitting device from the receiving device receipt of the data, the acknowledging step indicating whether a transmission error occurred between the transmitting device and the receiving device.

8. A method as recited in claim 7 further comprising the step of retransmitting the data from the transmitting device to the receiving device if the acknowledging step indicates that a transmission error occurred.

9. A method as recited in claim 7 wherein the acknowledging step comprises the steps of:
testing the data at the receiving device against a checksum byte transmitted with the data from the first memory to generate an error signal; and
transmitting an acknowledgment byte from the receiving device to the transmitting device to indicate the status of the error signal, the presence of the error signal indicating that a transmission error occurred.

10. A method as recited in claim 5 wherein the transmitting step includes the step of generating a checksum byte for addition to the data when transmitted from the first memory to the second memory.

11. A method as recited in claim 10 further comprising the step of acknowledging to the transmitting device from the receiving device receipt of the data, the acknowledging step indicating whether a transmission error occurred between the transmitting device and the receiving device.

12. A method as recited in claim 11 further comprising the step of retransmitting the data from the transmitting device to the receiving device if the acknowledging step indicates that a transmission error occurred.

13. A method as recited in claim 10 wherein the acknowledging step comprises the steps of:
testing the data at the receiving device against the checksum byte transmitted with the data from the first memory to generate an error signal; and
transmitting an acknowledgment byte from the receiving device to the transmitting device to indicate the status of the error signal, the presence of the error signal indicating that a transmission error occurred.

14. A data link module for a system bus data link comprises:
a serial port (24,26) for transmitting and receiving data;
a system port (28-36) for transmitting and receiving data;
means for storing (46-48) data from the system port and the serial port; and
means for transferring (64, 66) data from the storing means to the serial port and the system port.

FIG.1

FIG.2

FIG.3

## FIG. 5A

START

RESET

IF BLOCKOUT ? — NO → IF BLOCKIN ? — NO

YES

GOTO READ

YES

GOTO WRITE

## FIG. 5F

WRITE ENDA/B

RD FIFOA/B

ACK ? — NO → GOTO LINK ERRORA/B

YES

SIGNAL XFR END

GOTO START

READ

RESET FIFOA

WRITE FIFOA

TEST CKSUM COMP ? — NO → GOTO CKSUM ERRORA

YES

SEND ACK

BLK END ? — YES → GOTO START

NO

RESET FIFOB

WRITE FIFOB SCSI READ FIFOA

TEST CKSUM ? — NO → GOTO CKSUM ERRORB

YES

SEND ACK

WRITE FIFOA SCSI RD FIFOB

BLK END ? — NO

YES

RESET FIFOA

GOTO START

FIG. 5B

# FIG.5C

```
                    ┌─────────┐
                    │  WRITE  │
                    └────┬────┘
                         │
                ┌────────▼────────┐
                │   RESET FIFOA   │
                └────────┬────────┘
                         │
                ┌────────▼────────┐
                │  SCSI WR FIFOA  │
                └────────┬────────┘
                         │
                ┌────────▼────────┐
                │   RESET FIFOB   │
                └────────┬────────┘
                         │
                      ╱──▼──╲           YES    ┌──────────────┐
                    ╱ BLK END ╲───────────────▶│  GOTO WRITE  │
                    ╲    ?    ╱                 │     ENDA     │
                      ╲──┬──╱                   └──────────────┘
                         │ NO
                ┌────────▼────────┐
                │  SCSI WR FIFOB  │
                │     RD FIFOA    │
                └────────┬────────┘
                         │
                      ╱──▼──╲            NO     ┌──────────────┐
                    ╱  ACK ?  ╲───────────────▶│  GOTO LINK   │
                    ╲         ╱                 │    ERRORA    │
                      ╲──┬──╱                   └──────────────┘
                         │ YES
                ┌────────▼────────┐
                │   RESET FIFOA   │
                └────────┬────────┘
                         │
                      ╱──▼──╲           YES    ┌──────────────┐
                    ╱ BLK END ╲───────────────▶│  GOTO WRITE  │
                    ╲    ?    ╱                 │     ENDB     │
                      ╲──┬──╱                   └──────────────┘
                         │ NO
                ┌────────▼────────┐
                │  SCSI WR FIFOA  │
                │     RD FIFOB    │
                └────────┬────────┘
                         │
            YES       ╱──▼──╲            NO     ┌──────────────┐
        ◀────────── ╱  ACK ?  ╲───────────────▶│  GOTO LINK   │
                    ╲         ╱                 │    ERRORB    │
                      ╲─────╱                   └──────────────┘
```

LINK ERRORA/B

RESET FIFOA/B
READ POINTER

SIGNAL LINK
ERROR

READ FIFOA/B

NO — ACK ? — YES — RETURN

FIG.5D

CKSUM ERRORA/B

RESET FIFOA/B

SIGNAL CKSUM
ERROR

SEND NACK

WR FIFOA/B

FIG.5E

RETURN — YES — CKSUM ? — NO

FIG. 4

SCSI DATA — XCVR (28) — XCVR (30) — FIFO A (54) — LATCH (64) — XMTR (26) → $S_{OUT+}$, $S_{OUT-}$

18

BUFFER (62), BUFFER (60), FIFO A (46), FIFO B (48), BUFFER (52), LATCH (64), BUFFER (66)

LATCH (32), SCSI STATUS, LATCH (34), LATCH (36)

SCSI & FIFO CTL (44), RCVR CLKS & FIFO WR (56), XMTR CLKS & FIFO RD (58), CKSUM GEN (70)

µP (38), CONTROL (42), LINK ACK/NACK (76)

CKSUM COMP (68), LINK STATUS (78), LATCH (72), LATCH (74)

RCVR (24) → $S_{IN+}$, $S_{IN-}$

12, 40, 50